# EUROPÄISCHE PATENTSCHRIFT

(11) **EP 0 897 072 B1**
(45) Veröffentlichungstag und Bekanntmachung des Hinweises auf die Patenterteilung: **21.05.2003**
(21) Anmeldenummer: 98890232.6
(22) Anmeldetag: 06.08.1998
(51) Int. Cl.: F16D 67/02, B62D 11/08

(54) **Kupplungs- und Bremseinrichtung für eine Antriebseinheit**
Clutch and brake device for a drive unit
Dispositif d'embrayage et de frein pour un groupe propulseur

(30) Priorität: 13.08.1997 AT 136197
(43) Veröffentlichungstag der Anmeldung: 17.02.1999
(73) Patentinhaber: REFORM-WERKE BAUER & CO. GESELLSCHAFT M.B.H., A-4600 Wels (AT)
(72) Erfinder: Stockinger, Josef, 4722 Bruck-Wasen (AT)
(74) Vertreter: Itze, Peter, Dipl.-Ing.

(56) Entgegenhaltungen:
- EP-A- 0 585 214
- FR-A- 1 060 318
- GB-A- 727 794
- US-A- 4 597 477
- US-A- 4 693 349

## Beschreibung

Die Erfindung betrifft eine Kupplungs- und Bremseinrichtung für eine Antriebseinheit mit einer Antriebswelle und einer zu dieser konzentrisch gelagerten Abtriebswelle, wobei ein Kupplungsteil mit der einen der beiden Wellen fest verbunden ist und zumindest ein weiterer federbelasteter Kupplungsteil auf der anderen der beiden Wellen drehfest und axial verschiebbar angeordnet ist und die beiden Kupplungsteile über einen konzentrisch zu den Wellen gelagerten Ring mit mindestens zwei am Umfang verteilten Kulissen und je einem an den Kulissen angreifenden Ausrücker durch eine auf den Ring einwirkende Bremseinrichtung voneinander trennbar sind.

Eine derartige Kupplungs- und Bremseinrichtung ist aus der AT-PS 397 546 bekannt, wobei bei dieser bekannten Ausbildung die Ausrücker an dem federbelasteten Kupplungsteil angebracht sind und sich der mit den Kulissen versehene Ring am feststehenden Gehäuse abstützt. Dies erfordert einen hohen Bauaufwand für Lagerung und Ausrückung. Weiters wird durch die Notwendigkeit der Abstützung der rotierenden Teile am Gehäuse die Funktionssicherheit verringert und der Wartungsaufwand erhöht.

Es ist daher Aufgabe der Erfindung, die Nachteile der bekannten Ausführung zu beseitigen und eine Kupplungs- und Bremseinrichtung zu schaffen, welche sich durch geringen Bauaufwand sowie hohe Funktionssicherheit bei weitgehender Wartungslosigkeit auszeichnet.

Die Aufgabe der Erfindung wird dadurch gelöst, daß der Ring auf dem federbelasteten Kupplungsteil axial unverschiebbar und in Umfangsrichtung drehbar gelagert ist, und daß die an den Steuerflächen der Kulissen des Ringes angreifenden Ausrücker an der Abtriebswelle abgestützt sind. Diese Anordnung ergibt den Vorteil, daß unter Beibehaltung der Funktionalitäten der bekannten Einrichtung der Bauaufwand verringert sowie die Funktionssicherheit erhöht wird. Durch die Abstützung des Ringes auf der Abtriebswelle wird darüberhinaus der Wartungsaufwand verringert:

Vorteilhafterweise kann zur Abstützung der Ausrücker an der Abtriebswelle an dieser eine Scheibe axial festgelegt sein, wodurch eine einfache und funktionell sichere Lösung für die Abstützung des Ringes erzielt ist. Weiters kann der federbelastete Kupplungsteil mindestens zwei parallel zur Achse der Abtriebswelle verlaufende Durchbrüche zur Lagerung der Ausrücker aufweisen, wodurch eine einfache und sichere Festlegung der Lage der Ausrücker und damit eine gleichbleibende Abstützung des Ringes erreicht ist. Ein wesentlicher Beitrag zur Verringerung des Bauaufwandes und der aufzubringenden Ausrückkräfte wird erreicht, wenn als Ausrücker Kugeln, vorzugsweise Wälzlagerkugeln dienen. Zur Erzielung einer besonders einfachen und kostengünstigen Ausführung können die am Ring angebrachten Steuerflächen der Kulissen als Schraubenebenenflächen ausgeführt sein, wobei die Achse der Schraube koaxial zu den Wellen liegt. Für eine vorteilhafte und platzsparende Ausgestaltung der Erfindung können die die Kulissen bildenden Schraubenebenenflächen auf einer Scheibe angebracht sein, die mittels mehrerer Stifte am Ring der Kupplungseinrichtung zugewendet befestigt ist, wobei der Ring durch ein Kugellager am federbelasteten Kupplungsteil gelagert ist. Schließlich können die Stifte in als Begrenzungsanschläge dienende, größeren Durchmesser als die Stifte aufweisende Bohrungen des federbelasteten Kupplungsteiles eingreifen, wodurch die Stifte noch eine zusätzliche Funktion erhalten, was die erfindungsgemäße Ausbildung zusätzlich vereinfacht.

In der Zeichnung ist ein Ausführungsbeispiel des Erfindungsgegenstandes dargestellt.

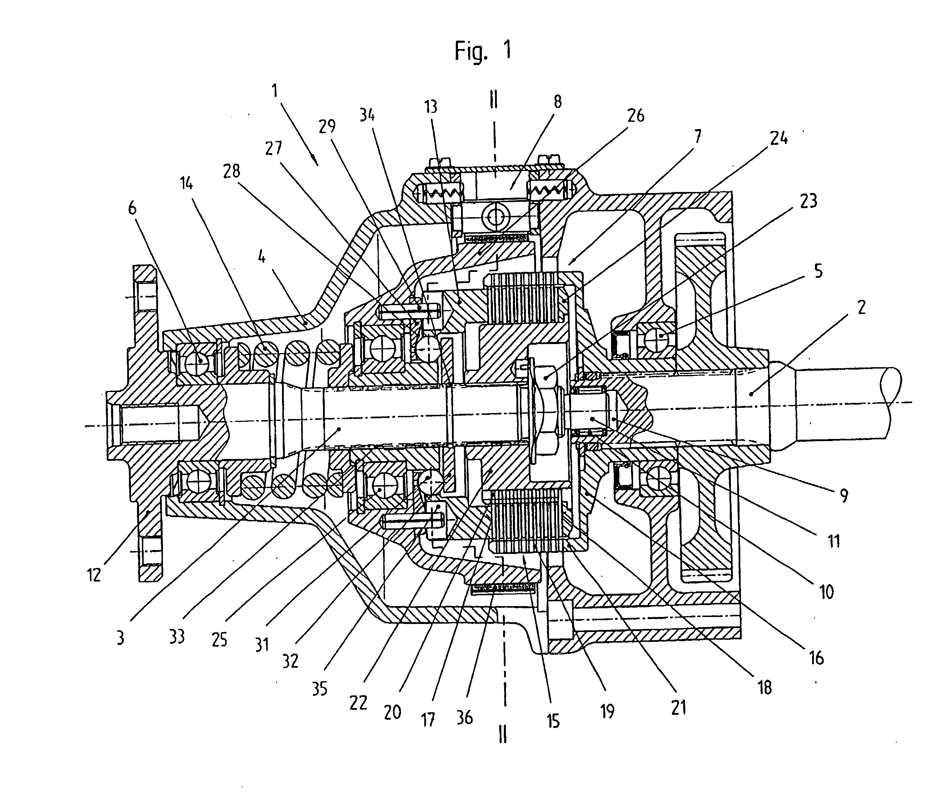

Fig. 1 zeigt eine Antriebseinheit im Längsschnitt nach der Linie I-I der Fig. 2.

Fig. 2 ist ein Querschnitt nach der Linie II-II der Fig. 1.

Die dargestellte Antriebseinheit 1 besteht aus einer Antriebswelle 2 und einer Abtriebswelle 3, welche in einem Gehäuse 4 mittels Lager 5, 6 zueinander konzentrisch gelagert sind, einer Kupplungseinrichtung 7 sowie einer Bremseinrichtung 8. Die Antriebswelle 2 wird von einer nicht dargestellten Kraftquelle getrieben und weist an ihrem in das Gehäuse 4 ragenden Ende eine Bohrung 9 zur Aufnahme eines mittels eines Nadellagers 10 gelagerten Zapfens 11 der Abtriebswelle 3 auf. Am anderen Ende der Abtriebswelle 3 ist ein Flansch 12 zum Verbinden mit einer nicht dargestellten getriebenen Einheit angeordnet.

Die Kupplungseinrichtung 7 besteht in dem dargestellten Ausführungsbeispiel aus einem auf der Abtriebswelle 3 drehfest und axial verschiebbar gelagerten Kupplungsteil 13, einer axial darauf wirkenden Druckfeder 14, einer Lamellenkupplung 15 sowie einem mit der Antriebswelle 2 fest verbundenen Kupplungsteil 16.

Die Lamellenkupplung 15 weist eine Anzahl von zwischen den Andrückflächen 17, 18 angeordneten Lamellen 19, 20 auf, wobei die Außenlamellen 19 in die Mitnehmer 21 des Kupplungsteiles 16 der Antriebswelle 2 und die Innenlamellen 20 in den Mitnehmer 22 der Abtriebswelle 3 greifen. Der Mitnehmer 22 ist drehfest mit der Abtriebswelle 3 verbunden und axial durch die Mutter 23 gehalten. Die Andrückflächen 17 bzw. 18 werden durch die Stirnflächen des Kupplungsteiles 13 bzw. der auf dem Mitnehmer 22 gehaltenen Scheibe 24 gebildet.

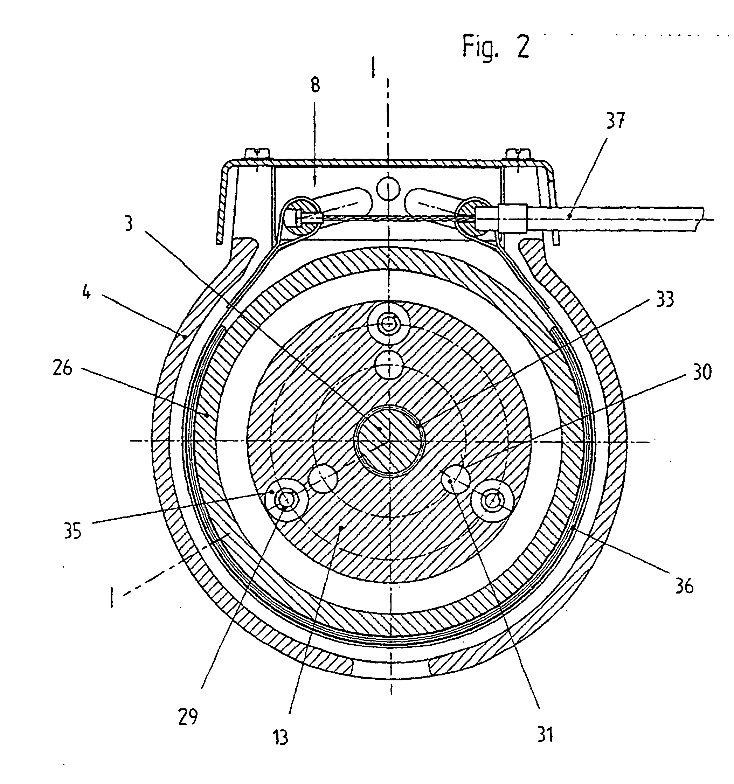

Der axial verschiebbare Kupplungsteil 13 trägt außen einen mittels eines Kugellagers 25 axial unverschiebbar und in Umfangsrichtung drehbar gelagerten Ring 26. An diesem Ring 26 ist an der der Kupplungseinrichtung 7 zugewandten Seite eine Scheibe 27 mit Kulissen 28 befestigt, deren Steuerflächen durch Abschnitte einer Schraubenebenenfläche gebildet sind. Die Achse der die Kulissen 28 definierenden Schraube verläuft koaxial zur Achse der Wellen 2 bzw. 3. Die Befestigung der Scheibe 27 am Ring 26 erfolgt mittels dreier Stifte 29. Wie aus Fig. 2 ersichtlich ist, weist der federbelastete Kupplungsteil 13 drei gleichmäßig am Umfang verteilte Durchbrüche 30 auf in denen die Ausrücker 31 gelagert sind. Die Ausrücker 31 sind vorliegend als Kugeln ausgeführt und die Durchbrüche 30 als zylindrische Bohrungen, in denen die Kugeln 31 gelagert sind. Die Ausrücker 31 werden einerseits an den Flächen der Kulissen 28 und andererseits an der Scheibe 32 abgestützt. Die Scheibe 32 ist wie der federbelastete Kupplungsteil 13 und der Mitnehmer 22 mittels einer Zahnwellenverbindung 33 mit der Abtriebswelle drehfest verbunden. Die axiale Sicherung der Scheibe 32 erfolgt mit dem Haltering 34.

Die zur Befestigung der Scheibe 27 dienenden Stifte 29 ragen in Bohrungen 35 des federbelasteten Kupplungsteiles 13 ein, deren Durchmesser größer ist als jener der Stifte. Wie aus Fig. 2 ersichtlich, sind vorzugsweise drei am Umfang gleichmäßig verteilte Stifte 29 vorgesehen. Sie wirken mit den Bohrungen 35 zusammen als Begrenzungsanschlag für die Schwenkbewegung des Ringes 26 gegenüber dem federbelasteten Kupplungsteil 13.

Die Bremseinrichtung 8 besteht aus einem Bremsband 36, dessen Enden im Gehäuse 4 spannbar gelagert sind und mittels eines Seilzuges 37 betätigt werden.

Die Funktion dieses vorbeschriebenen Ausführungsbeispieles einer Kupplungs- und Bremseinrichtung für eine Antriebseinheit ist folgendermaßen: Bei gelöster Bremseinrichtung treibt die Antriebswelle 2 über die durch die Kraft der Druckfeder 14 eingerückte Lamellenkupplung 15 die Abtriebswelle 3 an, wobei die Ausrücker 31 mit kleinem Spiel in den Steuerflächen der Kulissen 28 anliegen. Bei Betätigung der Bremseinrichtung 8 wird durch die Abbremsung des Ringes 26 dieser gegenüber dem Kupplungsteil 13 verdreht, wodurch die Ausrücker 31 an den durch Schraubenebenen gebildeten Steuerflächen der Kulissen 28 auflaufen. Durch die axiale Abstützung des Kupplungsteiles 13 auf der Abtriebswelle 3 wird die vom Kupplungsteil 13 auf die Lamellenkupplung 15 ausgeübte Anpreßkraft und damit das übertragbare Drehmoment verringert.

Die Abtriebswelle 3 kommt zum Stillstand, wenn zwischen dem übertragbaren Drehmoment der Lamellenkupplung 15 und der Summe des Abtriebsmomentes an der Abtriebswelle 3 sowie des von der Bremseinrichtung 8 erzeugten Bremsmomentes ein Gleichgewichtszustand erreicht wird.

Der Einsatz dieser erfindungsgemäßen Einrichtung ist sowohl für Lenkeinrichtungen an Einachsfahrzeugen als auch für sonstige Antriebe im Fahrzeug- und Maschinenbau möglich.

## Patentansprüche

1. Kupplungs- und Bremseinrichtung für eine Antriebseinheit mit einer Antriebswelle und einer zu dieser konzentrisch gelagerten Abtriebswelle, wobei ein Kupplungsteil mit der einen der beiden Wellen fest verbunden ist und zumindest ein weiterer federbelasteter Kupplungsteil auf der anderen der beiden Wellen drehfest und axial verschiebbar angeordnet ist und die beiden Kupplungsteile über einen konzentrisch zu den Wellen gelagerten Ring mit mindestens zwei am Umfang verteilten Kulissen und je einem an den Kulissen angreifenden Ausrücker durch eine auf den Ring einwirkende Bremseinrichtung voneinander trennbar sind, **dadurch gekennzeichnet, daß** der Ring (26) auf dem federbelasteten Kupplungsteil (13) axial unverschiebbar und in Umfangsrichtung drehbar gelagert ist, und daß die an den Steuerflächen der Kulissen (28) des Ringes (26) angreifenden Ausrücker (31) an der Abtriebswelle (3) abgestützt sind.

2. Kupplungs- und Bremseinrichtung nach Anspruch 1, **dadurch gekennzeichnet, daß** zur Abstützung der Ausrücker (31) an der Abtriebswelle (3) an dieser eine Scheibe (32) axial unverschiebbar festgelegt ist.

3. Kupplungs- und Bremseinrichtung nach Anspruch 1 oder 2, **dadurch gekennzeichnet, daß** der federbelastete Kupplungsteil (13) mindestens zwei parallel zur Achse der Abtriebswelle (3) verlaufende Durchbrüche (30) zur Lagerung der Ausrücker (31) aufweist.

4. Kupplungs- und Bremseinrichtung nach einem der Ansprüche 1 bis 3, **dadurch gekennzeichnet, daß** als Ausrücker (31) Kugeln, vorzugsweise Wälzlagerkugeln dienen.

5. Kupplungs- und Bremseinrichtung nach einem oder mehreren der Ansprüche 1 bis 4, **dadurch gekennzeichnet, daß** die am Ring (26) angebrachten Steuerflächen der Kulissen (28) als Schraubenebenenflächen ausgeführt sind und daß die Achse der Schraube koaxial zu den der Wellen (2,3) liegt.

6. Kupplungs- und Bremseinrichtung nach dem Anspruch 5 , **dadurch gekennzeichnet, daß** die die Kulissen (28) bildenden Schraubenebenenflächen auf einer Scheibe (27) angebracht sind, die mittels mehrerer Stifte (29) am Ring (26) der Kupplungseinrichtung (7) zugewendet befestigt ist, wobei der Ring (26) durch ein Kugellager (25) am federbelasteten Kupplungsteil (13) gelagert ist.

7. Kupplungs- und Bremseinrichtung nach Anspruch 6, **dadurch gekennzeichnet, daß** die Stifte (29) in als Begrenzungsanschläge dienende, größeren Durchmesser als die Stifte (29) aufweisende Bohrungen (35) des federbelasteten Kupplungsteiles (13) eingreifen.

## Claims

1. Clutch and brake assembly for a drive unit having a drive shaft and an output shaft coaxially with the drive shaft, wherein a clutch part is fixedly connected to the one of the two shafts and at least one other spring loaded clutch part is non-rotationally and axially displaceable on the other of the two shafts and the two clutch parts are separable from each other via a ring concentrically mounted relative to the two shafts using at least two slotted pieces and a disengaging part acting upon the slotted pieces by a braking device acting on said ring, **characterized in that** the ring (26) is mounted axially immoveably and rotationally in the peripheral direction on the spring-loaded clutch part and the disengaging part (13) acting on the control surfaces of the slotted parts (28) of the ring (26) are supported upon the driven shaft (3).

2. The clutch and brake device according to Claim 1, **characterized in that** a disk (32) is axially displaceably mounted on the driven shaft (3) for supporting the disengaging part (31).

3. The clutch and brake device according to Claim 1 or 2, **characterized in that** the spring loaded clutch part (13) has at least two passages (30) running parallel to the axis of the driven shaft (3) for mounting the disengaging parts (31).

4. The clutch and brake device according to Claims 1 to 3, **characterized in that** balls, preferably roller bearing balls, are used as the disengaging part (31).

5. The clutch and brake device according to one or several of Claims 1 to 4, **characterized in that** the control surfaces of the slotted parts (28) arranged on the ring (26) are configured as screw planes of rotation and the axis of the screw lies coaxial to the shafts (2, 3).

6. The clutch and brake device according to Claim 5, **characterized in that** the screw planes of rotation forming the slotted parts (28) are arranged on a disk (27) that is fastened by means of a plurality of pins (29) onto the ring (26) facing the clutch device (7), whereby the ring (26) is borne by a ball bearing (25) on the spring-loaded clutch part (13).

7. The clutch and brake device according to Claim 6, **characterized in that** the pins (29) engage in bore holes (35) of the spring-loaded clutch part (13), said holes having larger diameters than the pins (29) and serving as limiting means.

## Revendications

1. Dispositif d'embrayage et de frein pour un groupe propulseur avec un arbre propulseur et un arbre récepteur disposé concentriquement à celui-ci, une partie de l'embrayage étant reliée fixement à l'un des deux arbres et au moins une autre partie de l'embrayage commandée par ressort non rotative et coulissant dans le sens axial étant disposée sur l'autre des deux arbres et les deux parties de l'embrayage pouvant être séparées l'une de l'autre via une bague placée concentriquement aux arbres avec au moins deux coulisses réparties sur le pourtour et un dispositif de débrayage agissant sur chacune des coulisses, par un dispositif de freinage agissant sur la bague, **caractérisé en ce que** la bague (26) est disposée sur la partie de l'embrayage à ressort (13) de façon à ne pas coulisser axialement et à tourner dans le sens périphérique, et que les dispositifs de débrayage (31) agissant sur les surfaces de commande des coulisses (28) de la bague (26) reposent sur l'arbre récepteur (3).

2. Dispositif d'embrayage et de frein selon la revendication 1 **caractérisé en ce que** pour soutenir les dispositifs de débrayage (31) sur l'arbre récepteur (3), un disque (32) est fixé sur celui-ci de façon à ne pas pouvoir se déplacer dans le sens axial.

3. Dispositif d'embrayage et de frein selon les revendications 1ou 2 **caractérisé en ce que** la partie de l'embrayage à ressort (13) présente au moins deux ouvertures (30) parallèles à laxe de l'arbre récepteur (3) pour loger les dispositifs de débrayage (31).

4. Dispositif d'embrayage et de frein selon l'une des revendications 1 à 3 **caractérisé en ce que** des billes, de préférence des billes de paliers de roulement, servent de dispositif de débrayage (31).

5. Dispositif d'embrayage et de frein selon l'une ou plusieurs des revendications 1 à 4 **caractérisé en ce que** les surfaces de commandes des coulisses (28) appliquées sur les bagues (26) sont constituées comme des surfaces planes à vis et que l'axe de la vis est coaxial à celui des arbres (2,3).

6. Dispositif d'embrayage et de frein selon la revendication 5 **caractérisé en ce que** les surfaces planes à vis constituant les coulisses (28) sont appliquées sur un disque (27) fixé au moyen de plusieurs goupilles (29) à la bague (26) tournées en direction du dispositif d'embrayage (7), la bague (26) étant montée sur les parties de l'embrayage à ressort (13) à l'aide d'un roulement à billes (25).

7. Dispositif d'embrayage et de frein selon la revendication 6, **caractérisé en ce que** les goupilles (29) s'insèrent dans des alésages (35) de la partie de l'embrayage à ressort (13) servant de butoirs et présentant un diamètre supérieur à celui des goupilles (29).
